# EUROPÄISCHE PATENTSCHRIFT

(11) **EP 2 605 886 B1**
(45) Veröffentlichungstag und Bekanntmachung des Hinweises auf die Patenterteilung: **16.07.2014**
(21) Anmeldenummer: 11740637.1
(22) Anmeldetag: 02.08.2011
(51) Int. Cl.: B23Q 9/02

(54) **KUPPLUNGSBOHRUNGS-BEARBEITUNGSVORRICHTUNG**
COUPLING-BORE MACHINING DEVICE
DISPOSITIF D'USINAGE DE TROUS D'ACCOUPLEMENT

(30) Priorität: 20.08.2010 DE 102010039594
(43) Veröffentlichungstag der Anmeldung: 26.06.2013
(60) Teilanmeldung: 13001085.3
(73) Patentinhaber: Siemens Aktiengesellschaft, 80333 München (DE)
(72) Erfinder: RYNKOWSKI, Patrick, 47055 Duisburg (DE); VOGT, Felix, 46119 Oberhausen (DE)
(86) Internationale Anmeldenummer: PCT/EP2011/063261
(87) Internationale Veröffentlichungsnummer: WO 2012/022606

(56) Entgegenhaltungen:
- WO-A1-03/097283
- DD-A- 91 407
- DD-A1- 126 823
- DE-U1- 29 721 223
- US-A- 3 916 519
- US-A1- 2004 175 247
- SCHENK W-D: "Zirkularfraesen loest Tiefenprobleme", TECHNISCHE RUNDSCHAU, HALLWAG AG, CH, Bd. 99, Nr. 12, 22. Juni 2007 (2007-06-22) , Seiten 22-23, XP001523886, ISSN: 1023-0823

## Beschreibung

Die vorliegende Erfindung betrifft eine Kupplungsbohrungs-Bearbeitungsvorrichtung zur Bearbeitung von auf einem Teilkreis liegenden Bohrungen von Kupplungsflanschen einer Kupplung mit einem Portal, das zwei parallel zueinander angeordnete und miteinander verbundene, insbesondere bogenförmig ausgebildete Ständer aufweist, und einer Bearbeitungseinheit, die an einer Kreisbogenführung des Portals in einer X-Y Ebene bewegbar geführt ist.

Kupplungsbohrungs-Bearbeitungsvorrichtungen der vorgenannten Art sind bekannt und werden insbesondere eingesetzt, um die Kupplungsflansche von Turbinen- bzw. Generatorwellen einer spanenden Endbearbeitung und hier speziell einer Honbearbeitung zu unterziehen.

DD-126823 offenbart eine Kupplungsbohrungs-Bearbeitungsvorrichtung zur Bearbeitung von auf einem Teilkreis liegenden Bohrungen von Kupplungsflanschen einer Kupplung mit einer Bearbeitungseinheit, wobei Positioniermittel vorgesehen sind, über die die Vorrichtung auf den Kupplungsflansch einer zu bearbeitenden Kupplung gesetzt und gegenüber diesen positioniert werden kann und Befestigungsmittel vorhanden sind, um die Vorrichtung an der Kupplung zu fixieren.

Kraftwerke mit fossiler und atomarer Energiebereitstellung bedienen sich in aller Regel dem Prinzip der Dampferzeugung mit einer anschließenden Expansion im sogenannten Dampfturbinen-Teil. Zugunsten eines optimalen Wirkungsgrades wird dort der Wasserdampf stufenweise entspannt, wobei zusätzlich eine Zwischenüberhitzung realisiert wird. So entsteht der typische Aufbau beginnend mit einer Hochdruck (HD)-Turbine über eine Mitteldruck (MD)-Turbine bis hin zu einer meist doppelflutig ausgeführten Niederdruck (ND)-Turbine. Aus der Expansion des Dampfes resultiert eine technische Rotationsarbeit. Die Wellen der HD-, MD- sowie ND-Turbinenwellen sind mittels sogenannter Kupplungsflansche miteinander verbunden, denen die Aufgabe der Drehmomentübertragung obliegt. Realisiert wird die Übertragung des Drehmomentes durch eine formschlüssige Verbindung der Kupplungsflansche. Hierzu sind auf einem zur Wellenachse koaxial angeordneten Teilkreis Durchgangsbohrungen vorgesehen, in welche Kupplungsbolzen für eine formschlüssige Drehmomentübertragung eingepasst sind. Über die Kupplungsbolzen werden die Kupplungsflansche auch miteinander verspannt.

Im Extremfall muss jede Kupplung einem plötzlichen Stillstand des Generators, auch Erdschluss genannt, ohne Versagen standhalten können. In diesem Fall werden die Kupplungsbolzen immens auf Scherung beansprucht. Nicht zuletzt ist die korrekte Endbearbeitung der Kupplungsbohrungen ein Garant für einen sicheren Betrieb des Kraftwerkes. Damit ist eine Honbearbeitung unausweichlich.

Diese Honendbearbeitung wird üblicherweise vor Ort durchgeführt, um zu gewährleisten, dass die Kupplungsbohrungen der zu verbindenden Kupplungsflansche exakt zueinander ausgerichtet sind und korrespondieren. Entsprechend sind die bekannten Kupplungsbohrungs-Bearbeitungsvorrichtungen, auch kurz HKB (**H**on-**K**upplungs-**B**earbeitungsmaschine) genannt, für den mobilen Vorort-Einsatz vorgesehen. Die bekannten HKB besitzen ein Maschinenportal, das von zwei außenliegenden, halbrunden Ständern gebildet wird, die an ihren unten liegenden Enden durch horizontal liegende Rechteckprofile miteinander verbunden sind. Über das Portal wird die HKB ortfest, insbesondere auf der Teilfuge des Lagergehäuses zwischen den Turbinengehäusen fixiert. Des Weiteren trägt die HKB die eigentliche Bearbeitungseinheit, d.h. die Honantriebs- und Führungseinheiten, die zur Positionierung gegenüber der zu bearbeitenden Kupplungsbohrung an einer Kreisbogenführung des Portals bewegbar ist.

Ein Nachteil der bekannten HKB ist die beschränkte Einsetzbarkeit durch das extern zu fixierende Maschinenportal. So ist die Honmaschine grundsätzlich von "kupplungsnahen" Anschlussmöglichkeiten abhängig. Die im Regelfall sehr stark variierenden Gegebenheiten vor Ort erschweren den Einsatz zusätzlich. Oft ist es daher erforderlich, zusätzlich zu fertigende, kostenintensive Konsolen bzw. Befestigungssysteme vorzusehen. Darüber hinaus ist aufgrund des hohen Montageaufwands die Einsatzzeit lang, wodurch die Maschinenproduktivität verhältnismäßig gering liegt.

Schließlich begrenzt das vorhandene Maschinenportal den potentiellen Außendurchmesser-Einsatzbereich, da es keinen Raum für etwaige Anpassungen bzw. größere Durchmesser bietet. Nicht zuletzt ist die lediglich manuell durchzuführende Justierung der Maschine (Verstellen der Honeinheit an der Kreisbogenführung des Portals) ebenfalls verbesserungsfähig.

Vor diesem Hintergrund ist es die Aufgabe der vorliegenden Erfindung, eine Kupplungsbohrungs-Bearbeitungsvorrichtung der eingangs genannten Art zu schaffen, die variabel und unabhängig einsetzbar ist und auch bei beengten Platzverhältnissen am Bearbeitungsort schnell und mit geringem Aufwand montiert werden kann.

Dabei soll die Kupplungsbohrungs-Bearbeitungsvorrichtung insbesondere eine einfache und schnelle Bearbeitung der Kupplungsbohrungen ermöglichen.

Diese Aufgabe ist erfindungsgemäß bei einer Kupplungsbohrungs-Bearbeitungsvorrichtung dadurch gelöst, dass an den Ständern des Portals Positioniermittel vorgesehen sind, über die das Portal auf die Kupplungsflansche einer zu bearbeitenden Kupplung gesetzt und gegenüber diesen positioniert werden kann, und dass Befestigungsmittel vorhanden sind, um das auf die Kupplung gesetzte Portal an der Kupplung zu fixieren. Der Erfindung liegt damit die Überlegung zugrunde, die Kupplungsbohrungs-Bearbeitungsvorrichtung über die Ständer des Portals unmittelbar an der Kupplung selbst, d.h. den beiden Kupplungsflanschen anzubringen. Hierdurch entfällt die Abhängigkeit von kupplungsfremden Anschlussmöglichkeiten, wodurch die Montage vereinfacht wird. Des Weiteren bietet die erfindungsgemäße Ausgestaltung die Möglichkeit, die Größe der Ständer des Portals an den zu bearbeitenden Kupplungsaußendurchmesser anzupassen, so dass die erfindungsgemäße Kupplungsbohrungs-Bearbeitungsvorrichtung kompakt und raumsparend ist. Demgegenüber sind die bisherigen HKB mit starrem Portal gezwungen, sich an der Kupplung mit den maximalen Außenabmessungen zu orientieren.

In bevorzugter Weise kann dabei vorgesehen sein, dass die Ständer des Portals durch Verbindungsstreben miteinander verbunden sind, wobei die Länge der Verbindungsstreben veränderbar ist, um den Abstand der Ständer voneinander einzustellen. Diese Ausgestaltung bietet die Möglichkeit, die Abmessungen des Portals nicht nur an den Außendurchmesser der jeweiligen Kupplung, sondern auch an die Breite der Kupplung anzupassen. Dabei gilt es, die Abstandspunkte des Portals möglichst randnah auf der individuellen Kupplung zu orientieren. So wird einerseits eine hohe Stabilität gewährleistet, und andererseits werden die bei der Bearbeitung auftretenden Kippmomente auf ein Minimum reduziert. Durch die vorgesehene Verstellbarkeit ist es möglich, die Abstandspunkte optimal zu wählen.

Gemäß einer Ausführungsform der Erfindung ist vorgesehen, dass die Befestigungsmittel wenigstens ein Spannmittel aufweisen, um das auf eine zu bearbeitende Kupplung aufgesetzte und dort positionierte Portal an der Kupplung festzuspannen. Dabei kann jedem Ständer eine Spannvorrichtung zur Fixierung an einem Kupplungsflansch zugeordnet sein. Beispielsweise ist es möglich, dass die Spannvorrichtung Spanngurte umfasst, über welche die Ständer des Portals an den Kupplungsflanschen festgespannt werden, wobei die Spanngurte insbesondere an den unteren Enden der Ständer des Portals fixierbar sein können.

Des Weiteren ist es zweckmäßig, wenn die Befestigungsmittel eine Kippsicherung aufweisen, die das auf eine Kupplung aufgesetzte Portal gegen ein Verkippen sichern. Beispielsweise kann die Kippsicherung mehrere Befestigungsstreben aufweisen, die an dem Portal einerseits und der Kupplung andererseits befestigbar, insbesondere festschraubbar sind. Beispielsweise können an den unteren Endbereichen der Ständer Durchgangsbohrungen vorgesehen sein, über welche die Befestigungsstreben an dem Portal fixiert werden können. Kupplungsseitig können die dort ohnehin vorhandenen Bohrungen zur Anbringung der Befestigungsstreben genutzt werden.

In Weiterbildung der Erfindung kann vorgesehen sein, dass die Positioniermittel Stützfüße aufweisen, die an dem Portal an einer radial bezüglich der Kreisbogenführung liegenden Y-Richtung verstellbar gehalten sind. Durch die Verstellbarkeit der Stützfüße wird die Möglichkeit geschaffen, das Portal derart auszurichten, dass der Kupplungsbohrungsteilkreis koaxial zum Maschinenbogenportal steht. Demzufolge ist während der Bearbeitung lediglich ein Verfahren der Bearbeitungseinheit entlang der Kreisbogenführung des Portals für eine sukzessive Bearbeitung der Kupplungsbohrungen notwendig. Den Stützfüßen kommt dabei die Aufgabe zu, den radialen Abstand zwischen dem Außendurchmesser der Kupplung zum Innendurchmesser des Portals zu überbrücken und des Weiteren einen stabilen und sicheren Kontakt des Portals zur Kupplung zu gewährleisten. Der notwendige Hubweg der Stützfüße orientiert sich dabei am abzudeckenden Außendurchmesserspektrum der Kupplung.

Um eine optimale Ausrichtung im Hinblick auf eine einfache Handhabung bzw. eine exakte Position des Portals zu erreichen sind in bevorzugter Weise an den Trägern des Portals jeweils drei Stützfüße entlang der Kreisbogenführung verteilt angeordnet. Daraus resultieren drei Kontaktlinien-Paare, deren Abstand je Fuß mit wachsendem Kupplungsdurchmesser zunimmt. Demnach wird gleichzeitig ein Anstieg der Stabilität des Systems Portal-Kupplung erzeugt.

In bevorzugter Weise weist jeder Stützfuß jeweils zwei Kontaktflächen auf, die jeweils in ihrem zentralen Bereich etwa tangential zur Kreisbogenführung ausgerichtet sind. Die Kontaktflächen können dabei an Kontaktplatten ausgebildet sein, die an einem Grundkörper des zugehörigen Stützfußes lösbar angebracht sind. Die lösbare Konstruktion erlaubt eine optimale Werkstoffwahl. Beispielsweise bieten sich weiche Materialien wie Messing an, welche die Kupplung schonen und einfach zu bearbeiten sind. Des Weiteren werden eventuelle Störelemente der Kupplung weitestgehend kompensiert.

Bei einer Ausführungsform der Erfindung ist vorgesehen, dass die Bearbeitungseinheit einen Basisträger aufweist, der an der Kreisbogenführung des Portals bewegbar geführt ist und eine Schnittstelle zur Verbindung mit einem Bearbeitungsmodul der Bearbeitungseinheit besitzt. Dabei kann die Schnittstelle des Basisträgers Führungsmittel aufweisen, über welche ein Bearbeitungsmodul der Bearbeitungseinheit an dem Basisträger in einer radial bezüglich der Kreisbogenführung des Portals liegenden Y-Richtung verstellbar anbringbar ist.

Das Bearbeitungsmodul kann als ein Honmodul ausgebildet sein. Dieses besitzt dann einen an dem Basisträger anbringbaren Grundkörper und einen an dem Grundkörper in einer Z-Richtung, die senkrecht zu der durch die Kreisbogenführung definierten X-Y-Ebene liegt, verstellbar gehaltenen Schlitten, an dem ein Honkopf mit einer in Z-Richtung liegenden Rotationsachse montiert ist. Dabei kann der Grundkörper an dem Basisträger in einer radial bezüglich der Kreisbogenführung liegenden Y-Richtung bewegbar, d.h. höhenverstellbar, angebracht sein, um den Honkopf gegenüber dem zu bearbeitenden Bohrungsteilkreis ausrichten zu können. Dabei ist der Honkopf an einem mit dem Schlitten verbundenen und sich insbesondere in Y-Richtung erstreckenden Querträger drehbar gehalten und unterhalb des Schlittens angeordnet. In bevorzugter Weise ist der Grundträger an der Portaloberseite vorgesehen, während der Honkopf an der Portalunterseite positioniert sein muss.

In weiterer Ausgestaltung dieser Ausführungsform ist vorgesehen, dass ein Honantrieb des Honmoduls an dem Schlitten montiert und mit dem Honkopf über ein Getriebe verbunden ist, welches zumindest im Wesentlichen in dem Querträger untergebracht ist. Auf diese Weise wird eine kompakte Baueinheit erzielt.

Zusätzlich kann auch ein Bearbeitungsmodul vorgesehen sein, welches als ein Zirkular-Fräsmodul ausgebildet ist, das einen an dem Basisträger anbringbaren Grundkörper, eine mit einem Antrieb verbundene Frässpindel, deren Spindelachse in einer senkrecht zu der durch die Kreisbogenführung definierten X-Y-Ebene liegenden Z-Richtung verläuft und an der ein Fräskopf drehfest aber axial verstellbar montiert oder montierbar ist, mit dem Grundkörper verbundene Tragarme, an denen die Frässpindel gelagert ist und die gegenüber dem Grundkörper in der X-Y-Ebene durch entsprechende Antriebe motorisch verstellbar sind, und einem Antrieb zur Verstellung eines an der Frässpindel gehaltenen Fräskopfes in Z-Richtung, aufweist, wobei die Antriebe mit einer Steuerung gekoppelt oder koppelbar sind, welche die Bewegung der Tragarme in der X-Y-Ebene, die Drehgeschwindigkeit der Frässpindel und den Vorschub eines an der Frässpindel angebrachten Fräskopfes in Z-Richtung zur Ausführung eines Zirkular-Fräsprozesses steuert. Diesem Aspekt der Erfindung liegt die Überlegung zugrunde, die Kupplungsbohrungen vor der Honendbearbeitung durch einen Zirkular-Fräsvorgang zu bearbeiten. Die unterbrochene Spanabnahme bei einem solchen Zirkular-Fräsen erzeugt kurze Späne, die sich einfach aus der Bohrung entfernen lassen. Des Weiteren findet keine negative Beeinflussung der Frässpindel durch Aufstauung oder Verhedderung statt. Außerdem ist die zu erwartende Oberflächenqualität besser als die Qualität, die durch die konventionelle Spindelbearbeitung erzielbar ist. Im Ergebnis werden bessere Voraussetzungen für die abschließende Honbearbeitung geschaffen.

Im Übrigen erlauben die relativ kleinen Fräsbearbeitungsbelastungen beim Zirkular-Fräsen eine kompakte, platzsparende und miniaturartige Konstruktion, die insbesondere vor dem Hintergrund, dass ohnehin relativ wenig Platz zur Verfügung steht, von Vorteil ist. Im Endeffekt können beliebigen Kupplungsbohrungen sukzessive im Schrupp- bzw. im Schlichtschnitt bearbeitet werden.

Im Betrieb werden zunächst die zum Teil versetzten Achsen bzw. unterschiedlichen Durchmesser der Kupplungsbohrungen über Messtaster erfasst. Ziel ist eine einheitliche Kupplungsbohrung (eine gemeinsame Achse) mit optimaler Zylinderform (Toleranz 0,02mm), deren Absolutkoordinaten (X-Y) beeinflussbar sind.

Auf der Grundlage der ermittelten Messdaten wird über die Steuerung ein CNC-gesteuerter Zirkular-Fräsprozess gestartet, bei dem die Frässpindel mit entsprechend hoher Drehzahl gedreht wird. Auf der Frässpindel ist ein Fräskopf drehfest, aber in Z-Richtung mittels eines linearen Vorschubsystems verfahrbar ist, montiert. Die Frässpindel ist beidseitig über Tragarme gelagert, und zwar vorzugsweise nach Art einer Fest-Los-Lagerung. Während des Fräsens werden die Tragarme in der X-Y-Ebene bewegt, um die Position der Spindelachse in der X-Y-Ebene zu verändern und so den Zirkular-Fräsprozess auszuführen.

Gemäß einer bevorzugten Ausführungsform ist vorgesehen, dass die Tragarme an einem Rahmen angebracht und gegenüber diesem in einer radial bezüglich der Kreisbogenführung liegenden Y-Richtung verstellbar sind, und der Rahmen an dem Grundkörper in einer X-Richtung, die senkrecht zu der Y-Richtung und parallel zu der X-Y-Ebene liegt, verstellbar gehalten ist. Bei dieser Ausgestaltung werden die Tragarme in X-Richtung über den Rahmen verstellt und führen selbst die Bewegung in der Y-Richtung aus. Mit anderen Worten erfolgt eine Entkopplung der Bewegungen, so dass eine präzise Steuerung möglich ist. In einfacher Weise kann dabei nur einer der Tragarme an dem Grundkörper bzw. Rahmen verstellbar geführt sein, wenn die beiden Tragarme miteinander verbunden sind.

Um die Flexibilität und den Einsatzbereich des Zirkular-Fräsmoduls zu erhöhen, können die beiden Tragarme in Z-Richtung relativ zueinander verstellbar sein. Auf diese Weise können unterschiedlich lange Frässpindeln eingesetzt werden, die entsprechend der Klemmlänge der jeweiligen Kupplung gewählt werden.

Der Fräskopf ist gemäß einer Ausführungsform der Erfindung an einem Support lösbar angebracht, insbesondere stirnseitig festgeschraubt, der an der Frässpindel drehfest angebracht und axial verschiebbar geführt ist. Die lösbare Anbringung des Fräskopfes an dem Support erlaubt es, unterschiedliche Fräsköpfe zu montieren. Dies eröffnet die Möglichkeit, auch Verschnitte (Kupplungszylindersenkungen) zirkular zu bearbeiten. Dabei ist eine Rechtwinkligkeit zur Kupplungsbohrung zu 100% gewährleistet, wenn entsprechende Zentrierflächen vorgesehen sind. Beispielsweise können an dem Support und/oder dem Fräskopf zueinander korrespondierende kegelförmige Zentrierflächen vorgesehen sein.

In weiterer Ausgestaltung ist vorgesehen, dass die Frässpindel einerseits und der Support bzw. der Fräskopf andererseits zueinander korrespondierende, sich in Axialrichtung erstreckende Führungsmittel, insbesondere an der Frässpindel ausgebildete Schienen und in den Support eingesetzte Führungswagen aufweisen, wobei korrespondierende Paare von Führungsmitteln insbesondere auf gegenüberliegenden Seiten der Spindelachse vorgesehen sind.

Für die Bewegung des Fräskopfes entlang der Frässpindel kann in der Frässpindel eine sich in Z-Richtung erstreckende und insbesondere in Umfangsrichtung mittig zwischen den Führungsmittel positionierte Ausnehmung vorgesehen sein, in welcher eine Gewindespindel, insbesondere eine Kugelumlaufspindel drehbar gelagert ist, die eine an dem Fräskopf bzw. dem Support fixierte Gewindemutter trägt. Mit anderen Worten kann in an sich bekannter Weise der Fräskopf axial bewegt werden, indem die Gewindespindel relativ zu der Frässpindel rotiert wird.

Dabei kann die Gewindespindel ein Antriebsritzel tragen, welches mit der Innenseite eines koaxial zu der Frässpindel drehbar gehaltenen und antreibbaren Hohlrads in Eingriff steht. Im Betrieb werden sowohl die Frässpindel als auch das Hohlrad angetrieben. Wenn die Drehzahl des Hohlrads gleich der Drehzahl der Spindel ist, steht der Fräskopf, und wenn die Drehzahl des Hohlrads kleiner oder größer als die der Spindel ist, verfährt der Fräskopf in Z-Richtung.

Hinsichtlich weiterer vorteilhafter Ausgestaltungen der Erfindung wird auf die Unteransprüche sowie nachfolgende Beschreibung eines Ausführungsbeispiels unter Bezugnahme auf die beiliegende Zeichnung verwiesen. In der Zeichnung zeigt
- Figur 1: eine Kupplungsbohrungs-Bearbeitungsvorrichtung gemäß der vorliegenden Erfindung in perspektivischer Darstellung von schräg vorne betrachtet,
- Figur 2: die Kupplungsbohrungs-Bearbeitungsvorrichtung aus Figur 1, die an einem zu bearbeitenden Kupplungsflansch montiert ist, in perspektivischer Vorderansicht,
- Figur 3: die Kupplungsbohrungs-Bearbeitungsvorrichtung aus Figur 2 in perspektivischer Darstellung von schräg hinten betrachtet,
- Figur 4: die Kupplungsbohrungs-Bearbeitungsvorrichtung aus Figur 2 ohne Bearbeitungsmodul in perspektivischer Darstellung,
- Figur 5: in perspektivischer Vorderansicht einen Ständer eines Portals der Kupplungsbohrungs-Bearbeitungsvorrichtung,
- Figur 6: einen Stützfuß des Portals aus Figur 5 in perspektivischer Darstellung,
- Figur 7: in perspektivischer Darstellung eine Befestigungsstrebe zur Sicherung eines auf eine Kupplung aufgesetzten Portals gegen ein Verkippen,

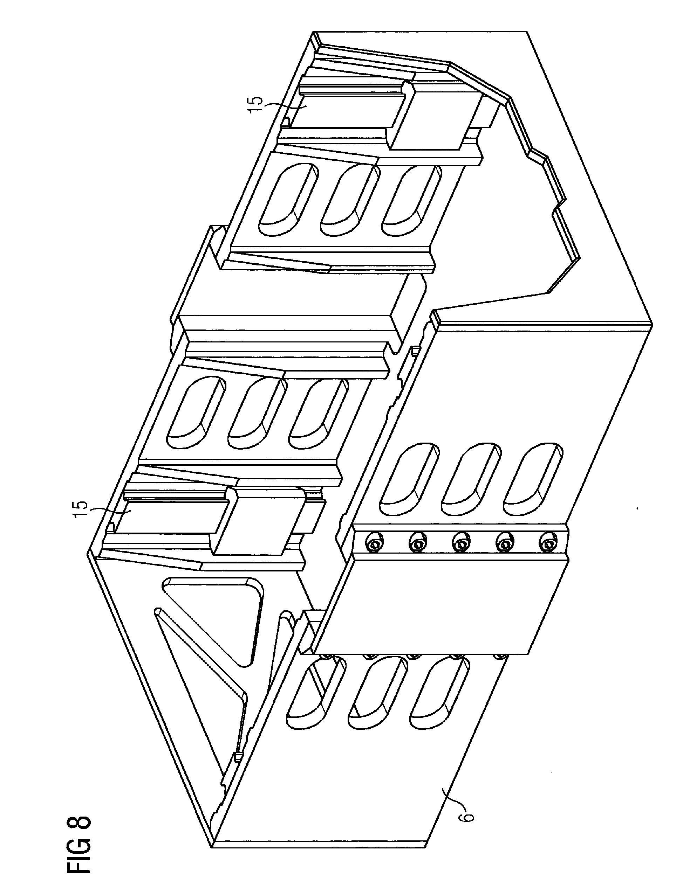

- Figur 8: einen Basisträger für eine adaptive Aufnahme des Hon- oder Fräsmoduls der Kupplungsbohrungs-Bearbeitungsvorrichtung in perspektivischer Darstellung,
- Figur 9: das Honmodul der Kupplungsbohrungs-Bearbeitungsvorrichtung aus Figur 1 in perspektivischer Darstellung,

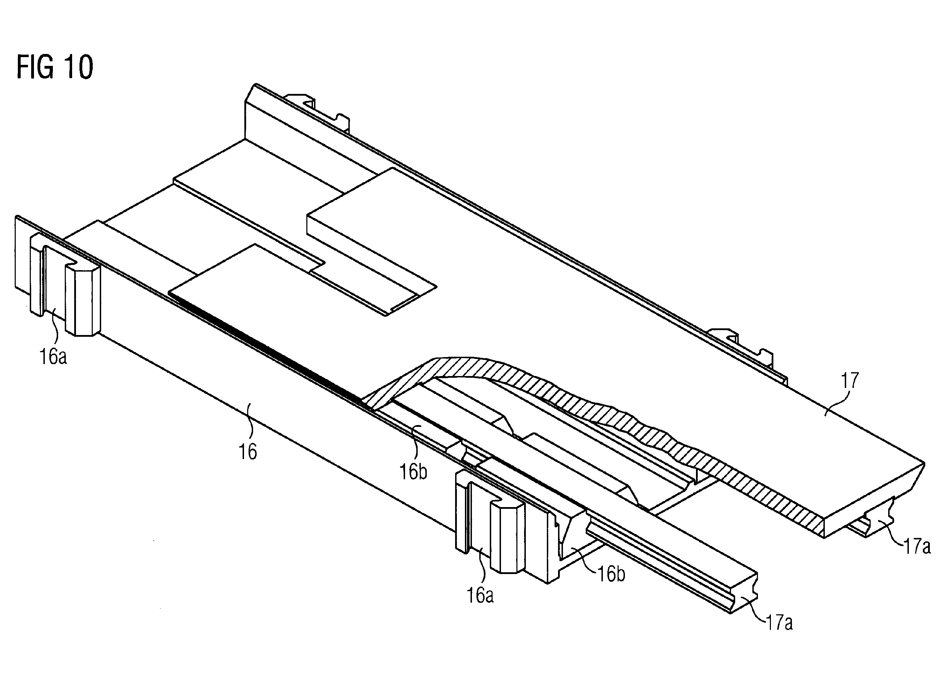

- Figur 10: in perspektivischer Darstellung einen Grundkörper des Honmoduls aus Figur 9 mit daran geführtem Hon-Hub-Schlitten in perspektivischer Ansicht von oben,

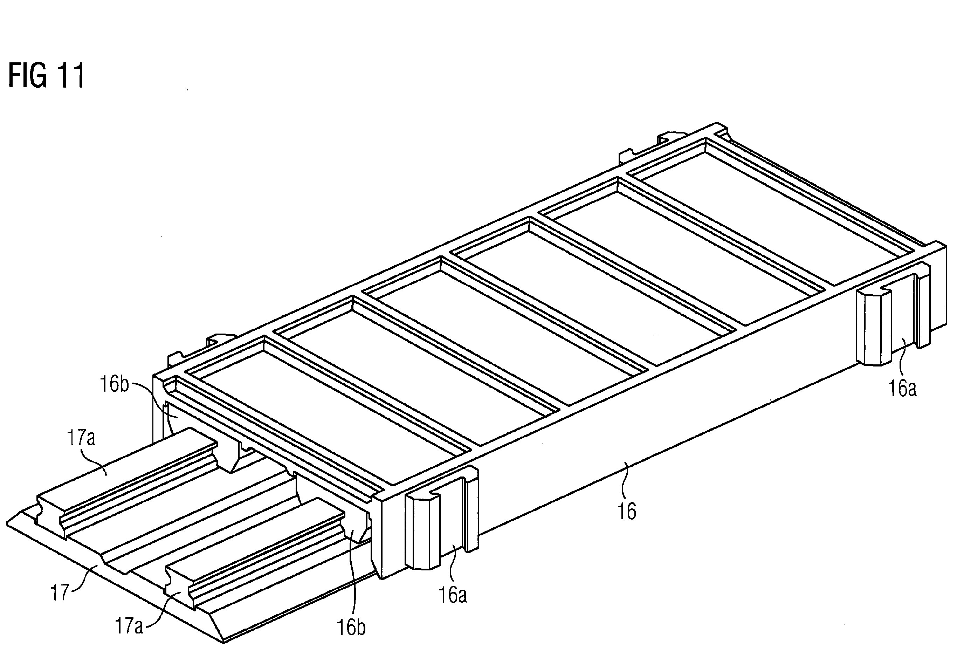

- Figur 11: den Grundkörper_aus Figur 10 in perspektivischer Ansicht von unten,
- Figur 12: ein Zirkular-Fräsmodul für eine Kupplungsbohrungs-Bearbeitungsvorrichtung gemäß der vorliegenden Erfindung,

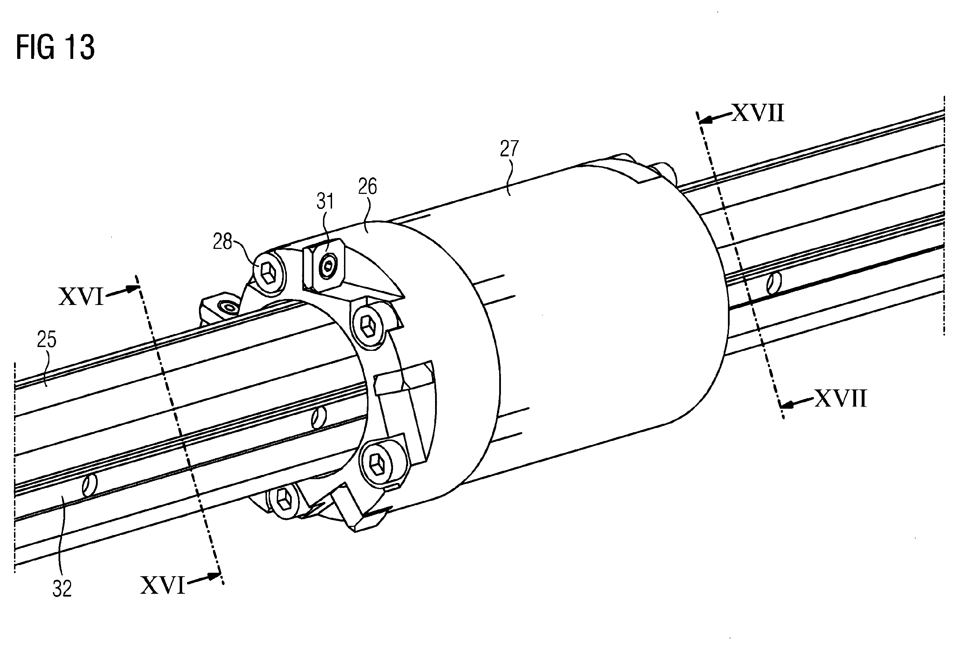

- Figur 13: einen an einer Frässpindel montierten Fräskopf des in Figur 12 dargestellten Zirkular-Fräsmoduls in vergrößerter, perspektivischer Darstellung,

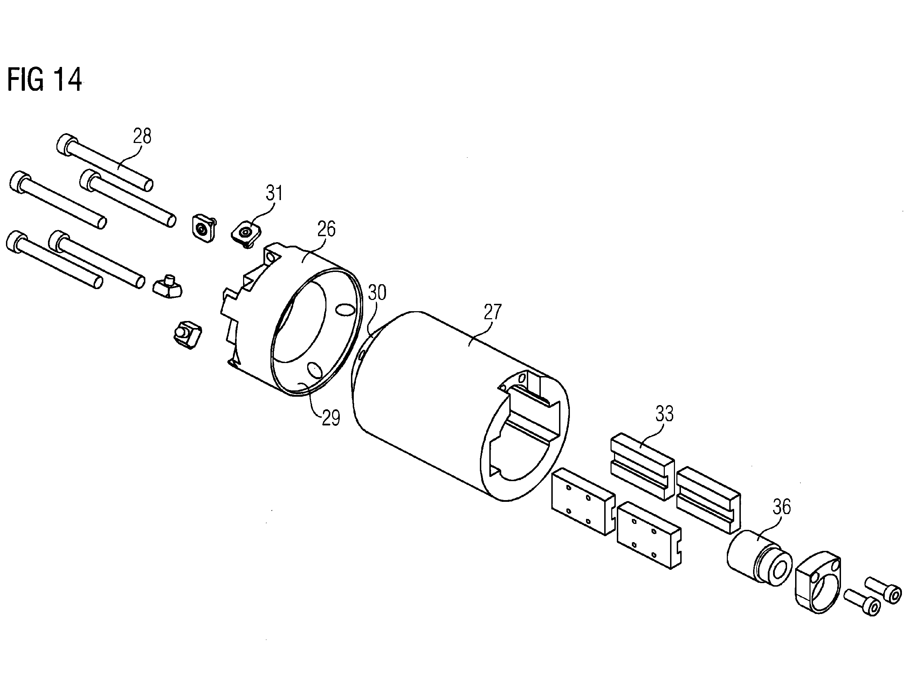

- Figur 14: den Fräskopf aus Figur 13 in perspektivischer Explosionsansicht,

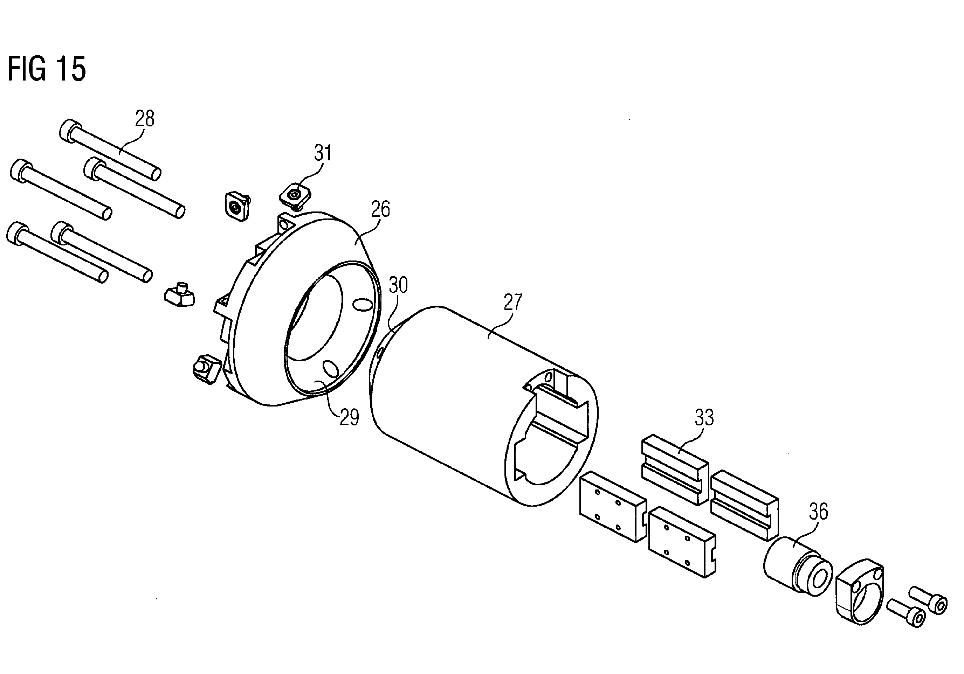

- Figur 15: den Fräskopf mit alternativem Werkzeugkopf für größere Durchmesser in perspektivischer Explosionsansicht,

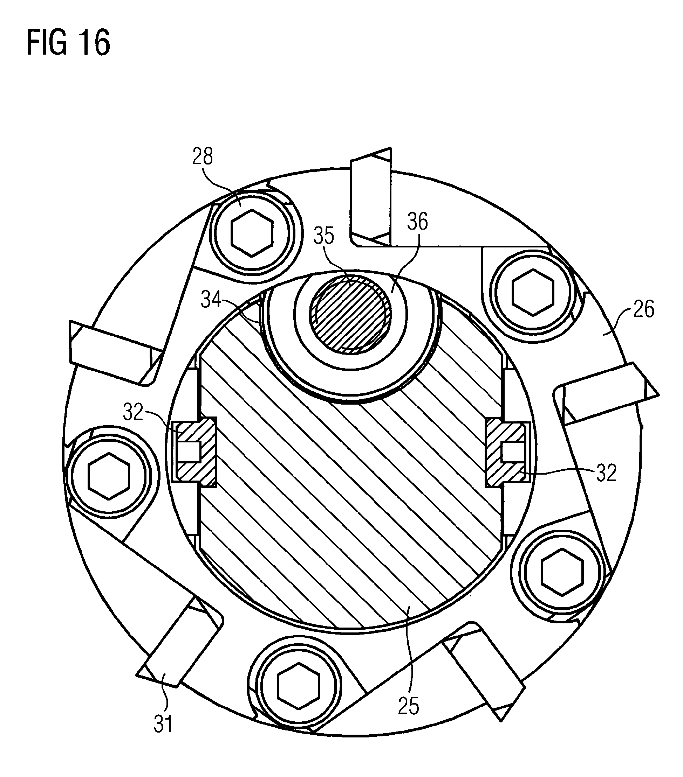

- Figur 16: die Anordnung der Figur 13 im Querschnitt entlang der Linie XVI-XVI,

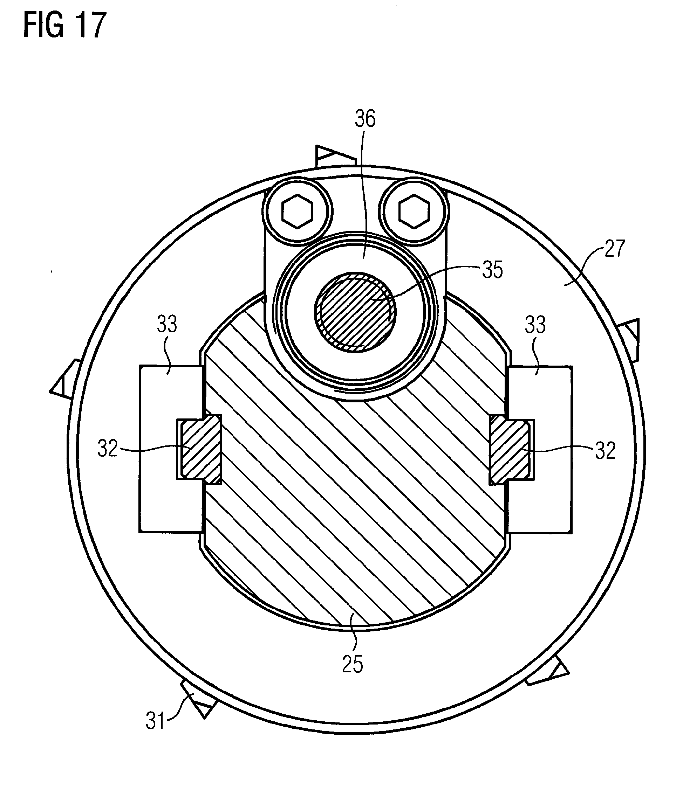

- Figur 17: die Anordnung aus Figur 13 im Querschnitt entlang der Linie XVII-XVII,

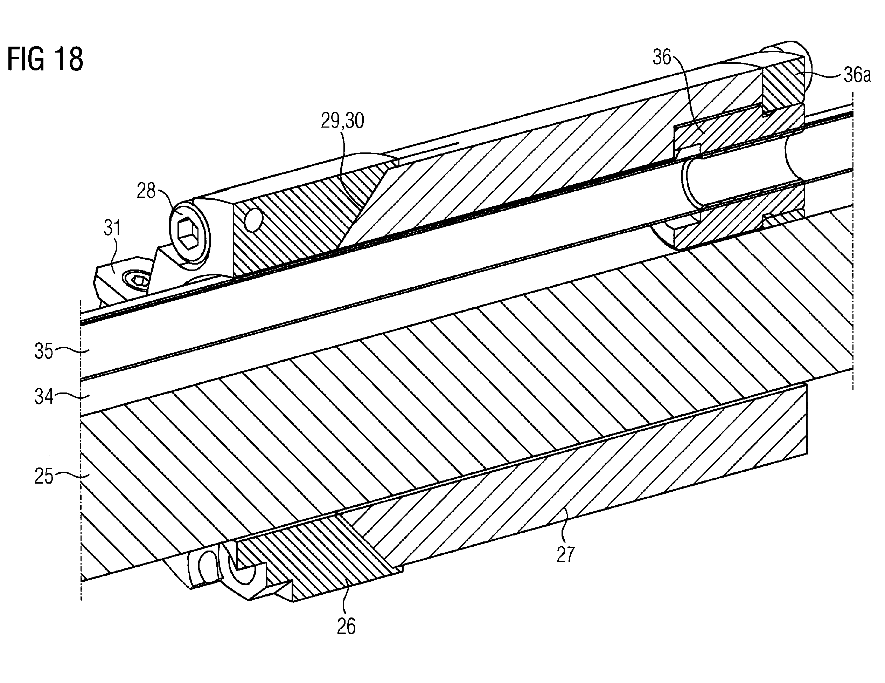

- Figur 18: die Anordnung aus Figur 11 im Längsschnitt durch die Gewindespindel bzw. Antriebsspindel,

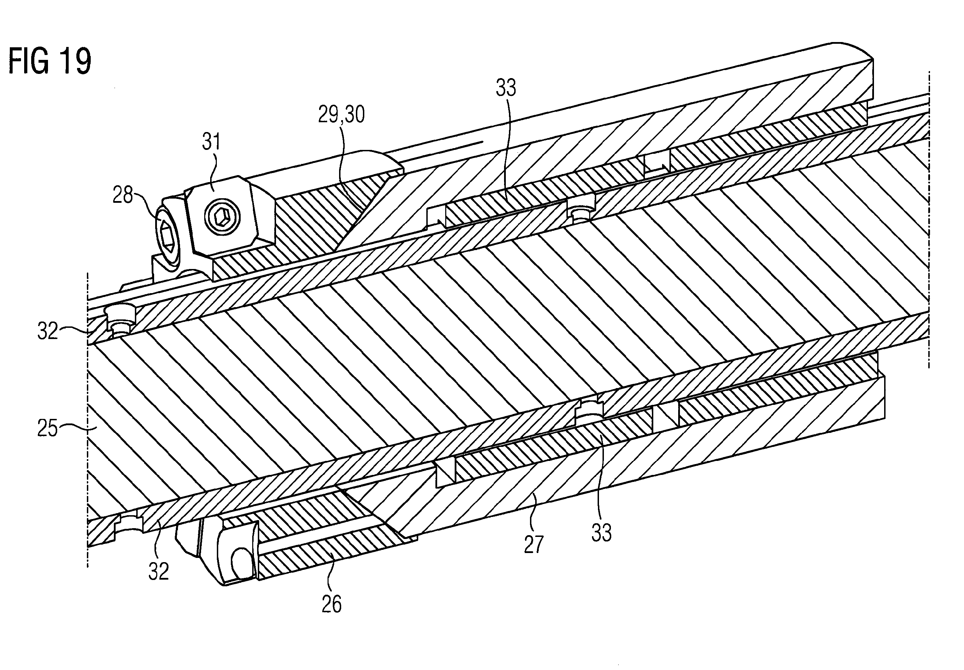

- Figur 19: die Anordnung aus Figur 13 im Längsschnitt durch die Führungsmittel, und
- Figur 20: den Querbalken des Zirkular-Fräsmoduls aus Figur 12 mit integriertem Antrieb für die Frässpindel.

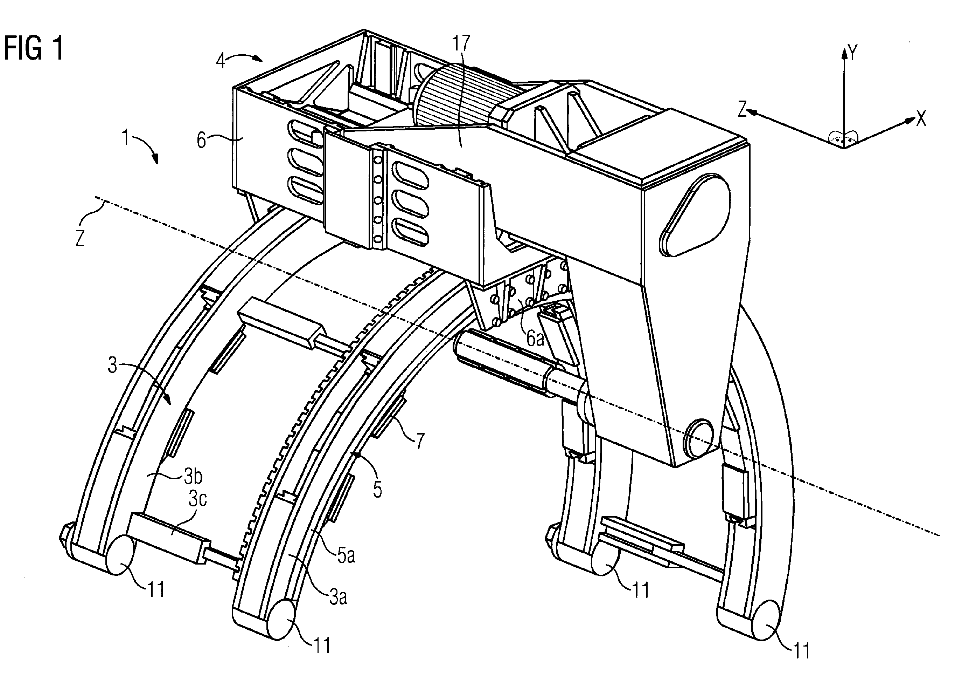

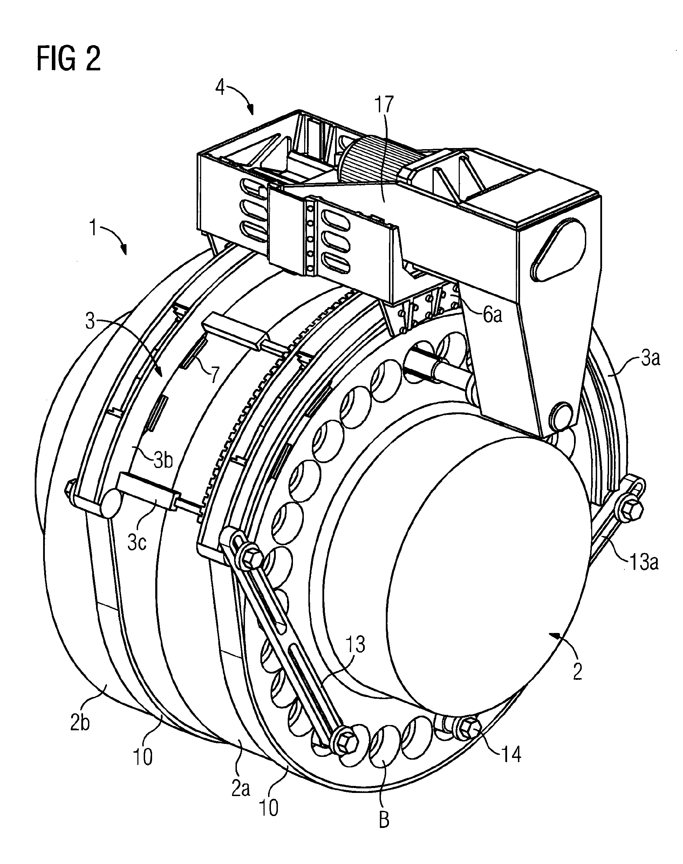

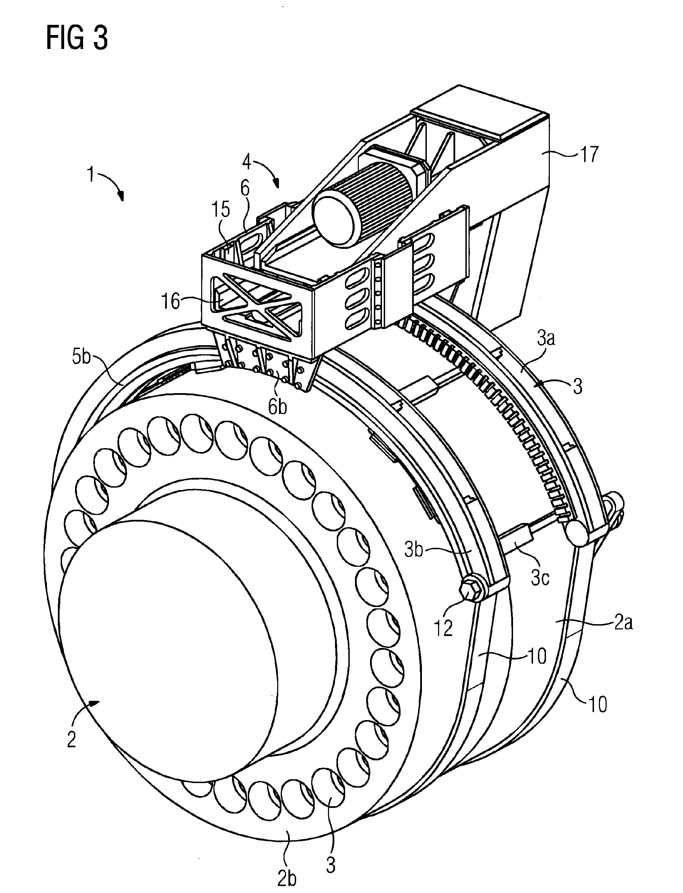

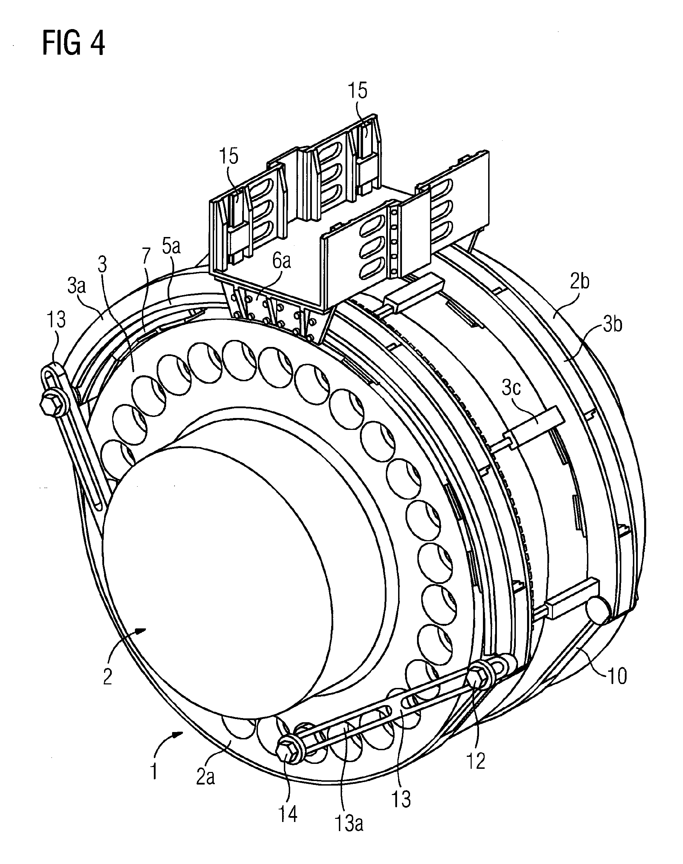

In den Figuren 1 bis 4 ist eine Kupplungsbohrungs-Bearbeitungsvorrichtung 1 gemäß der vorliegenden Erfindung dargestellt, die dazu dient, auf einem Teilkreis liegende Bohrungen B von Kupplungsflanschen 2a, 2b einer Kupplung 2 zu bearbeiten. Die Kupplungsbohrungs-Bearbeitungsvorrichtung umfasst ein Portal 3, das zwei parallel zueinander angeordnete, bogenförmig ausgebildete Ständer 3a, 3b aufweist, die durch mehrere sich quer zu den Ständern 3a, 3b erstreckende Verbindungsstreben 3c miteinander verbunden sind. Dabei sind die Verbindungsstreben 3c in der Länge veränderbar, so dass der Abstand der Ständer 3a, 3b und damit die Breite des Portals eingestellt werden kann.

Zu der Kupplungsbohrungs-Bearbeitungsvorrichtung 1 gehört weiterhin eine Bearbeitungseinheit 4, die an einer Kreisbogenführung 5 des Portals 3 in einer X-Y-Ebene bewegbar geführt ist. In der Zeichnung und insbesondere den Figuren 1 bis 3 ist gut erkennbar, dass die Bearbeitungseinheit einen Basisträger 6 aufweist, welcher auf das Portal 3 aufgesetzt ist und zwei nach unten abragende Führungen 6a, 6b aufweist, die mit entsprechenden Führungsschienen 5a, 5b der Kreisbogenführung 5 in Eingriff stehen. Nicht dargestellt ist, dass Arretiermittel vorgesehen sind, um den Basisträger 6 in verschiedenen Positionen entlang des Portals 3 zu fixieren.

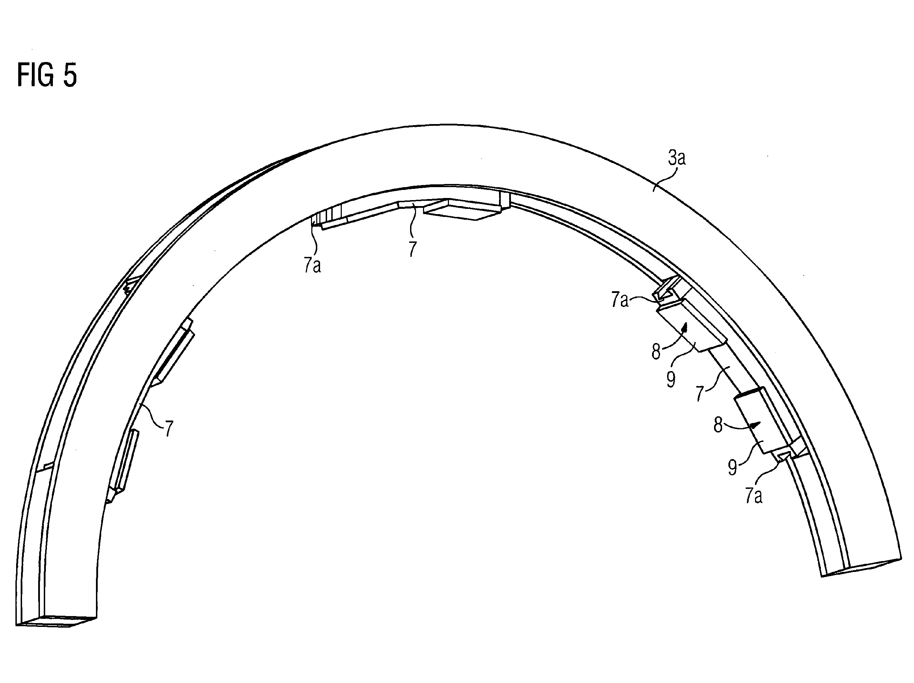

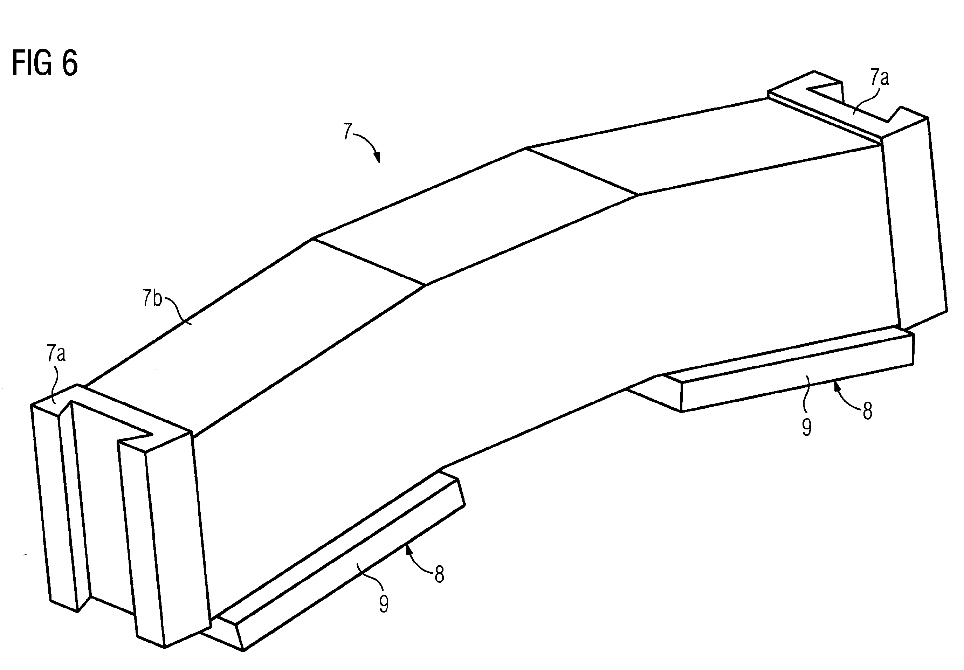

Erfindungsgemäß ist das Portal 3 ausgebildet, um unmittelbar auf das Portal 3 aufgesetzt und daran fixiert zu werden. Hierzu weist das Portal 3 Stützfüße 7 auf, die an dem Portal 3 in einer radial bezüglich der Kreisbogenführung 5 liegenden Y-Richtung verstellbar gehalten sind. Konkret ist an den Ständern 3a, 3b des Portals 3 jeweils ein Satz von drei Stützfüßen 7 vorgesehen, die gleichmäßig verteilt entlang der Kreisbogenführung 5 angeordnet und in der Y-Richtung entlang von klemmbaren Prismenführungen 7a verstellbar sind. Wie insbesondere in den Figuren 5 und 6 gut erkennbar ist, weist jeder Stützfuß 7 jeweils zwei Kontaktflächen 8 auf, die in ihrem zentralen Bereich etwa tangential zu der Kreisbogenführung 5 ausgerichtet sind. Die Kontaktflächen 8 sind an Kontaktplatten 9 ausgebildet, die an einem Grundkörper 7b des zugehörigen Stützfußes 7 lösbar angebracht, insbesondere festgeschraubt sind.

Die in Y-Richtung verstellbaren Stützfüße 7 erlauben es, die Ständer 3a, 3b des Portals 3 auf die Kupplungsflansche 2a, 2b aufzusetzen und dort derart zu positionieren, dass die Kreisbogenführung 5 koaxial zu dem Teilkreis der Bohrungen B bzw. der Kupplungsachse liegen. Demzufolge ist während der Bearbeitung lediglich ein Verfahren der Bearbeitungseinheiten entlang der Kreisbogenführung 5 des Portals 3 für eine sukzessive Bearbeitung der Kupplungsbohrungen 2b notwendig. Dem Stützfuß 7 kommt dabei die Aufgabe zu, den radialen Abstand zwischen dem Außendurchmesser der Kupplung 2 zum Innendurchmesser des Portals 3 zu überbrücken und des Weiteren einen stabilen und sicheren Kontakt des Portals 3 zur Kupplung 2 zu gewährleisten. Der notwendige Hubweg der Stützfüße 7 orientiert sich dabei am abzudeckenden Außendurchmesserspektrum der Kupplung. Durch die Anordnung von jeweils drei Stützfüßen 7 mit jeweils zwei Kontaktflächen 8 wird eine gute Abstützung des Portals 3 an den Kupplungsflanschen 2a, 2b erreicht.

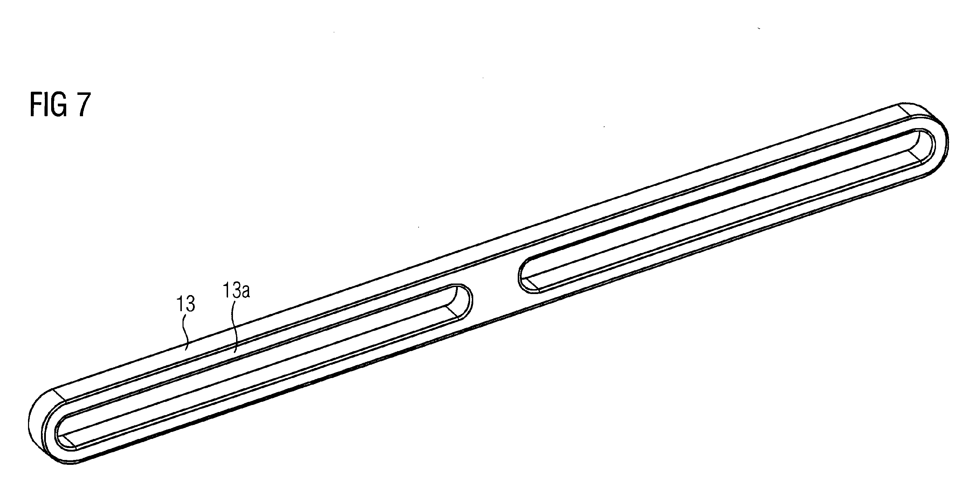

Zur Fixierung des Portals 3 an der Kupplung 2 sind Befestigungsmittel vorgesehen. Konkret ist jedem Ständer 3a, 3b des Portals 3 ein Spanngurt 10 zugeordnet, welcher um die Unterseite der Kupplungsflansche 2a, 2b gelegt und an den unteren Enden des zugehörigen Ständers 2a, 2b fixiert und festgespannt ist. Hierzu sind an den Endbereichen der Ständer 3a, 3b Durchgangsbohrungen 11 für Befestigungsbolzen 12 vorgesehen. Des Weiteren weisen die Befestigungsmittel eine Kippsicherung auf, die das Portal 3 zusätzlich gegen ein Verkippen sichern. Die Kippsicherung weist hier zwei Befestigungsstreben 13 auf, die an dem Portal 3 einerseits und der Kupplung 2 andererseits befestigt sind. Portalseitig erfolgt die Befestigung über die Befestigungsbolzen 12, durch welche auch die Spanngurte 10 an den Ständern 3a, 3b fixiert sind, und kupplungsseitig werden die dort ohnehin vorhandenen Bohrungen B genutzt, um die Befestigungsstreben 13 über entsprechende Befestigungsbolzen 14 zu fixieren. Wie insbesondere in der Figur 7 gezeigt ist, weisen die Befestigungsstreben 13 Langlöcher 13a auf, die eine Längeneinstellung ermöglichen.

Der Basisträger 6 der Bearbeitungseinheit besitzt eine Schnittstelle zur Verbindung mit einem Bearbeitungsmodul der Bearbeitungseinheit. Diese Schnittstelle umfasst nicht näher dargestellte Verbindungsmittel zur Herstellung einer elektrischen Verbindung sowie Verbindungsmittel zum Anschluss an eine Steuerungseinrichtung. Des Weiteren umfasst die Schnittstelle des Basisträgers 4 Führungsschienen 15, über welche ein Bearbeitungsmodul der Bearbeitungseinheit an dem Basisträger 6 in einer radial bezüglich der Kreisbogenführung 5 des Portals 3 liegenden Y-Richtung verstellbar anbringbar ist.

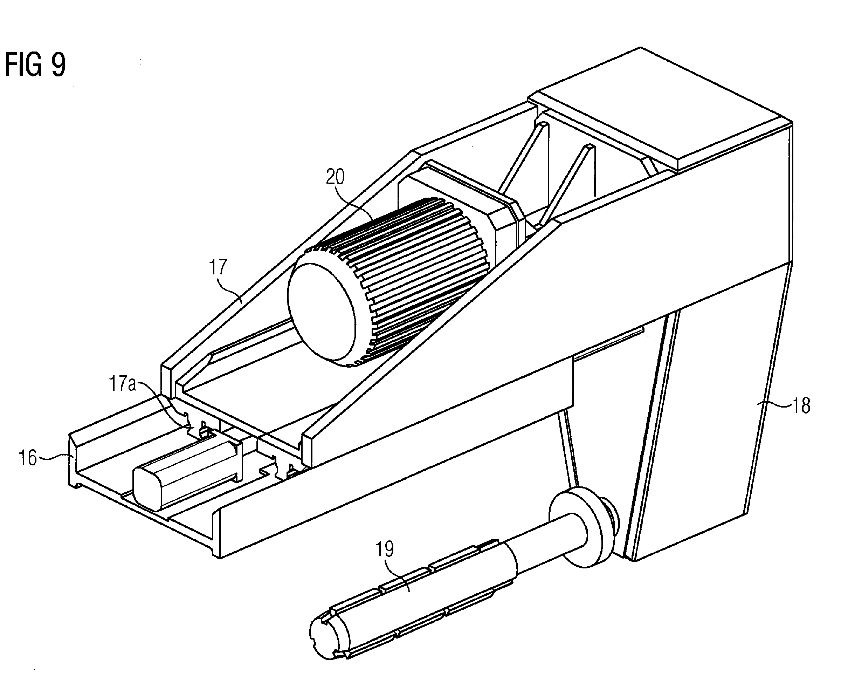

Wie in den Figuren 1 bis 3 dargestellt ist, kann ein Bearbeitungsmodul als ein Honmodul ausgebildet sein. Dieses umfasst einen an dem Basisträger 6 anbringbaren Grundkörper 16, der eine zu der Schnittstelle des Basisträgers 6 korrespondierende Schnittstelle besitzt. Insbesondere weist der Grundkörper 16 Führungsnuten 16a auf, die mit den in Y-Richtung verlaufenden Führungsschienen 15 des Basisträgers 6 korrespondieren. An dem Grundkörper 16 ist ein Schlitten 17 in einer Z-Richtung, die senkrecht zu der durch die Kreisbogenführung 5 definierten X-Y-Ebene liegt, verstellbar gehalten. Hierzu sind entsprechende Führungsschienen 17a und damit in Eingriff stehende Führungsnuten 16b am Schlitten 17 und am Grundkörper 16 vorgesehen. Der Schlitten 17 wiederum trägt an seinem einen Endbereich einen sich in Y-Richtung erstreckenden Querträger 18, an dessen unterem Ende ein Honkopf 19 mit einer in Z-Richtung liegenden Rotationsachse montiert ist. Der Schlitten 17 trägt ferner einen Honantrieb 20, der mit dem Honkopf 19 über ein in dem Querträger 18 untergebrachtes Getriebe verbunden ist (siehe auch Figur 9).

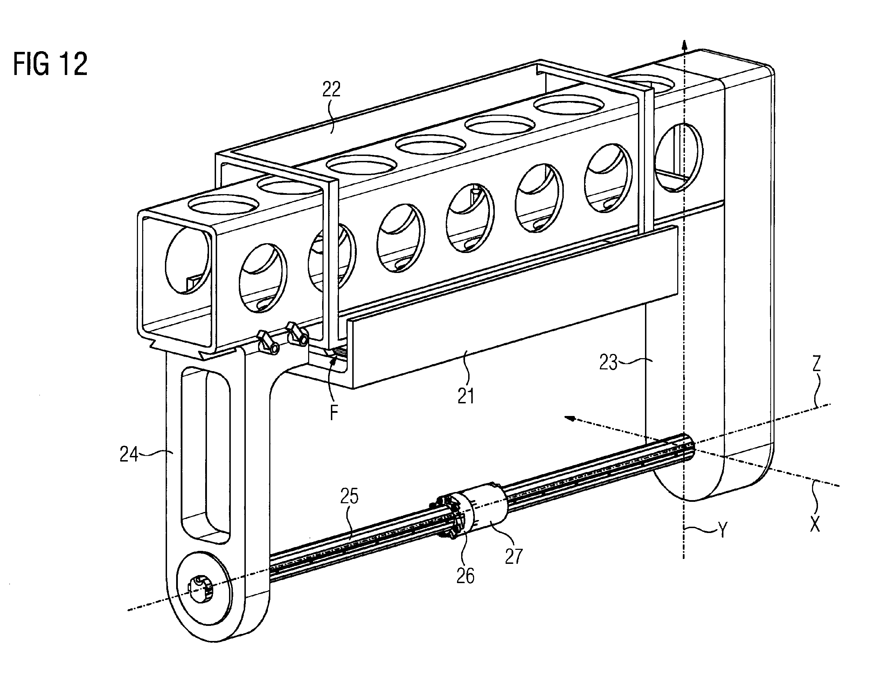

Des Weiteren ist ein Bearbeitungsmodul vorgesehen, welches als ein Zirkular-Fräsmodul ausgebildet ist. Dieses umfasst einen an dem Basisträger 6 anbringbaren Grundkörper 21, der eine zu der Schnittstelle des Basisträgers 6 korrespondierende Schnittstelle umfasst. Der Grundkörper 21 trägt einen Rahmen 22, der an dem Grundkörper 21 in einer X-Richtung, die senkrecht zu der Y-Richtung und parallel zu der X-Y-Ebene liegt, verstellbar gehalten ist, wozu der Grundkörper 21 und der Rahmen 22 entsprechende Führungsmittel F aufweisen, die in Figur 12 erkennbar sind.

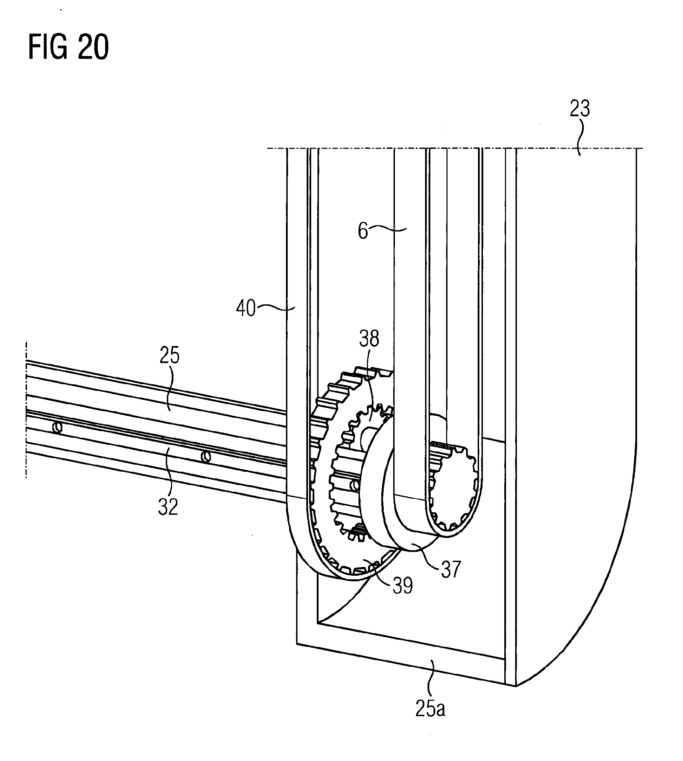

Der Rahmen 22 trägt zwei Tragarme 23, 24, wobei der erste Tragarm 23 an einem axialen Endbereich des Rahmens 22 in der Y-Richtung verstellbar angebracht ist und der andere Tragarm 24 mit dem ersten Tragarm 23 an seinem oberen Endbereich in Z-Richtung verstellbar verbunden ist. An dem unteren Ende der Tragarme 23, 24 ist eine Frässpindel 25 mit einer in Z-Richtung verlaufenden Rotationsachse nach Art einer Fest-Los-Lagerung montiert, wobei das Festlager an dem mit dem Rahmen 22 verbundenen Tragarm 23 vorgesehen ist. In diesem Tragarm 23 ist auch das Getriebe 6 unterbracht, über welches die Frässpindel 25 mit einem an dem Grundkörper 21 vorgesehenen Antrieb verbunden ist. Von dem Getriebe 6 ist in der Figur 20 ein Zahnriemen erkennbar, der mit einem endseitig von der Frässpindel 25 vorgesehenen Antriebsritzel 25a in Eingriff steht.

Die Frässpindel 25 trägt einen Fräskopf 26, der an der Frässpindel 25 drehfest, jedoch axial bewegbar montiert ist. Der Fräskopf 26 ist im Stil eines standardisierten Eckenfräsers aufgebaut und trägt an seiner vom Support 27 weg weisenden Stirnseite 5 handelsübliche Wendeschneidplatten 31, die an dem Fräskopf 26 festgeschraubt sind. Der Fräskopf 26 ist an einem Support 27 durch fünf Schrauben 28 stirnseitig lösbar montiert. Für eine genaue Ausrichtung des Fräskopfes 26 an dem Support 27 sind die beiden Bauteile 26, 27 mit zueinander korrespondierenden, kegelförmigen Zentrierflächen 29, 30 versehen. Die lösbare Anordnung des Fräskopfes 26 an dem Support 27 bietet die Möglichkeit, den Fräskopf 26 auszutauschen, wozu dieser geteilt ausgeführt sein kann.

Die Frässpindel 25 einerseits und der Support 27 andererseits besitzen zueinander korrespondierende, sich in Axialrichtung - d.h. in Z-Richtung - erstreckende Führungsmittel 32, 33. In dem hier dargestellten Ausführungsbeispiel sind an diametral gegenüberliegenden Seiten der Frässpindel 25 Führungsschienen 32 ausgebildet, die mit entsprechenden, in den Support 27 eingesetzten Führungswagen 33 in Eingriff stehen. Des weiteren ist in der Frässpindel 25 in Umfangsrichtung betrachtet mittig zwischen den Führungsmitteln 32, 33 eine Ausnehmung 34 vorgesehen, in welcher eine Gewindespindel - hier eine Kugelumlaufspindel 35 - in Z-Richtung liegend angeordnet und drehbar gelagert ist. Die Kugelumlaufspindel 35 trägt eine Gewindemutter 36, die mit dem Support 27 derart in Eingriff steht, dass eine Drehung der Kugelumlaufspindel 33 in eine Axialbewegung des Supports 27 und damit des Fräskopfes 26 umgesetzt wird.

Die Kugelumlaufspindel 35 ist an ihren axialen Endbereichen in entsprechenden Flanschen 37 der Frässpindel 25 drehbar gelagert. Des Weiteren trägt die Kugelumlaufspindel 35 ein Antriebsritzel 38, welches mit der Innenseite eines Hohlrades 39 kämmt, das koaxial zu der Frässpindel 25 drehbar gehalten und über einen im Tragarm 23 untergebrachten Zahnriemen 40 mit einem Antrieb verbunden ist.

Im Betrieb wird das Portal 3 mit dem Basisträger 6 unmittelbar an der zu bearbeitenden Kupplung 2 fixiert. Hierzu werden die Ständer 3a, 3b des Portals 3 auf die beiden Kupplungsflansche 2a, 2b aufgesetzt und dabei möglichst randnah positioniert, indem die Länge der Verbindungsstreben 3c, über welche die Ständer 3a, 3b miteinander verbunden sind, entsprechend eingestellt wird. Anschließend werden die Stützfüße 7 über die Prismenführungen 7a so verstellt, dass die Kreisbogenführung 5 koaxial zu der Kupplungsachse und damit zu dem Teilkreis der Bohrungen B liegt. Auf diese Weise ist während der Bearbeitung lediglich ein Verfahren der Bearbeitungseinheit entlang der Kreisbogenführung 5 des Portals 3 für eine sukzessive Bearbeitung der Kupplungsbohrungen B notwendig.

Nach erfolgter Ausrichtung der Ständer 3a, 3b werden diese an den Kupplungsflanschen 2a, 2b über die Spanngurte 10 fixiert. Zusätzlich werden die Befestigungsstreben 13 über die Befestigungsbolzen 14 an dem Portal 3 einerseits und der Kupplung 2 andererseits fixiert. Durch diese Sicherung mittel der Befestigungsstreben 13 sowie die Abstützung über die beiden Gruppen von jeweils drei Stützfüßen 7 wird das Portal 3 optimal an der Kupplung 2 abgestützt und gegen ein Verkippen gesichert.

Anschließend wird das Fräsmodul über seinen Grundkörper 21 an dem Basisträger 6 montiert. Bei dieser Montage sind die Frässpindel 25 und der das Loslager für die Frässpindel 25 bildende Tragarm 24 entfernt. Anschließend wird die Frässpindel 25 mit dem montierten Fräskopf 26 durch ein zu bearbeitendes Bohrungspaar der beiden Kupplungsflansche 2a, 2b geschoben und an dem Tragarm 23, welcher das Festlager für die Frässpindel 25 bildet, montiert. Hierzu wird der Basisträger 6 entlang der Kreisbogenführung 5 der Tragarme 23 gegenüber dem Rahmen 22 und der Rahmen 22 gegenüber dem Grundkörper 21 des Fräsmoduls entsprechend verstellt.

Nach so erfolgter Montage und Ausrichtung des Fräsmoduls wird der Zirkular-Fräsvorgang durchgeführt. Hierzu wird die Frässpindel 25 mit der geeigneten Drehzahl angetrieben, und des Weiteren werden die Antriebe für die Kugelumlaufspindel 35, den Rahmen 22 und den Tragarm 23 betätigt, um die Tragarme 23, 24 in der X-Y-Ebene zu bewegen und auf diese Weise die Position der Spindelachse in der X-Y-Ebene zu verändern und so den Zirkular-Fräsprozess auszuführen und koordiniert hierzu den Fräskopf 26 entlang der Frässpindel 25 zu bewegen. Dieser Vorgang wird über eine zentrale Steuerung automatisch ausgeführt.

Zur Bearbeitung einer weiteren Bohrung werden der Loslager-Tragarm 24 und die Frässpindel 25 zunächst entfernt. Anschließend wird die Bearbeitungseinheit entlang der Kreisbogenführung des Portals 3 an die geeignete Position verfahren, bevor die Frässpindel 25 und der Loslager-Tragarm 24 wieder montiert werden, um den nächsten Zirkular-Fräsprozess auszuführen.

Während der Fräsbearbeitung kann der Fräskopf 26 ausgetauscht werden, um unterschiedlich große Durchmesser bearbeiten zu können bzw. eine Schrupp- und Schlichtbearbeitung durchzuführen.

Nach beendeter Fräsbearbeitung wird das Fräsmodul entfernt, das Honmodul an dem Basisträger 6 montiert und in an sich bekannter Weise der Honvorgang ausgeführt, um die Endbearbeitung vorzunehmen. Dieser Vorgang kann vollautomatisch erfolgen, da für eine sukzessive Bearbeitung der Kupplungsbohrungen B der Basisträger 6 lediglich entlang der Kreisbogenführung 5 des Portals 3 verstellt zu werden braucht.

## Patentansprüche

1. Kupplungsbohrungs-Bearbeitungsvorrichtung (1) zur Bearbeitung von auf einem Teilkreis liegenden Bohrungen (B) von Kupplungsflanschen (2a, 2b) einer Kupplung (2) mit einem Portal (3),
das zwei parallel zueinander angeordnete und miteinander verbundene, insbesondere bogenförmig ausgebildete Ständer (3a, 3b) aufweist,
und einer Bearbeitungseinheit (4), die an einer Kreisbogenführung (5) des Portals (3) in einer X-Y Ebene bewegbar geführt ist,
**dadurch gekennzeichnet, dass**
an den Ständern (3a, 3b) des Portals (3) Positioniermittel vorgesehen sind, über die das Portal (3) auf die Kupplungsflansche (2a, 2b) einer zu bearbeitenden Kupplung (2) gesetzt und gegenüber diesen positioniert werden kann,
und dass Befestigungsmittel vorhanden sind, um das auf die Kupplung (2) gesetzte Portal (3) an der Kupplung (2) zu fixieren.

2. Kupplungsbohrungs-Bearbeitungsvorrichtung (1) nach Anspruch 1,
**dadurch gekennzeichnet, dass**
an jedem Ständer (3a, 3b) des Portals (3) eine Führungsbahn (5a, 5b) der Kreisbogenführung (5) ausgebildet ist.

3. Kupplungsbohrungs-Bearbeitungsvorrichtung (1) nach Anspruch 2 oder 3,
**dadurch gekennzeichnet, dass**
die Ständer (3a, 3b) des Portals (3) durch Verbindungsstreben (3c) miteinander verbunden sind,
wobei die Länge der Verbindungsstreben (3c) veränderbar ist, um den Abstand der Ständer (3a, 3b) voneinander einzustellen.

4. Kupplungsbohrungs-Bearbeitungsvorrichtung (1) nach einem der vorherigen Ansprüche,
**dadurch gekennzeichnet, dass**
die Befestigungsmittel wenigstens eine Spannvorrichtung aufweisen, um das auf eine zu bearbeitende Kupplung (2) aufgesetzte und dort positionierte Portal (3) an der Kupplung (2) festzuspannen.

5. Kupplungsbohrungs-Bearbeitungsvorrichtung (1) nach Anspruch 4,
**dadurch gekennzeichnet, dass**
jedem Ständer (3a, 3b) eine Spannvorrichtung zur Fixierung an jeweils einem Kupplungsflansch (2a, 2b) zugeordnet ist.

6. Kupplungsbohrungs-Bearbeitungsvorrichtung (1) nach Anspruch 4 oder 5,
**dadurch gekennzeichnet, dass**
die wenigstens eine Spannvorrichtung Spanngurte (10) umfasst.

7. Kupplungsbohrungs-Bearbeitungsvorrichtung (1) nach den Ansprüchen 5 und 6,
**dadurch gekennzeichnet, dass**
die Spanngurte (10) an den unteren Enden der Ständer (3a, 3b) des Portals (3) fixierbar sind.

8. Kupplungsbohrungs-Bearbeitungsvorrichtung nach einem der vorherigen Ansprüche,
**dadurch gekennzeichnet, dass**
die Befestigungsmittel eine Kippsicherung aufweisen, die das auf eine Kupplung (2) aufgesetzte Portal (3) gegen ein Verkippen sichert.

9. Kupplungsbohrungs-Bearbeitungsvorrichtung (1) nach Anspruch 7,
**dadurch gekennzeichnet, dass**
die Kippsicherung mehrere Befestigungsstreben (13) aufweist, die an dem Portal (3) einerseits und der Kupplung (2) andererseits befestigbar, insbesondere festschraubbar sind.

10. Kupplungsbohrungs-Bearbeitungsvorrichtung (1) nach einem der vorherigen Ansprüche,
**dadurch gekennzeichnet, dass**
die Positioniermittel Stützfüße (7) aufweisen, die an dem Portal (3) in einer radial bezüglich der Kreisbogenführung liegenden Y-Richtung verstellbar gehalten sind.

11. Kupplungsbohrungs-Bearbeitungsvorrichtung (1) nach Anspruch 10,
**dadurch gekennzeichnet, dass**
an den Ständern (3a, 3b) des Portals (3) jeweils drei Stützfüße (7) entlang der Kreisbogenführung (5) verteilt angeordnet sind.

12. Kupplungsbohrungs-Bearbeitungsvorrichtung (1) nach Anspruch 10 oder 11,
**dadurch gekennzeichnet, dass**
jeder Stützfuß (7) jeweils zwei Kontaktflächen (8) aufweist, die jeweils etwa tangential zur Kreisbogenführung (5) ausgerichtet sind.

13. Kupplungsbohrungs-Bearbeitungsvorrichtung (1) nach Anspruch 12,
**dadurch gekennzeichnet, dass**
die Kontaktflächen (8) an Kontaktplatten (9) ausgebildet sind, die an einem Grundkörper des zugehörigen Stützfußes (7) angebracht sind.

14. Kupplungsbohrungs-Bearbeitungsvorrichtung (1) nach einem der vorherigen Ansprüche,
**dadurch gekennzeichnet, dass**
die Bearbeitungseinheit (4) einen Basisträger (6) aufweist, der an der Kreisbogenführung (5) des Portals (3) bewegbar geführt ist und eine Schnittstelle zur Verbindung mit einem Bearbeitungsmodul der Bearbeitungseinheit (4) besitzt.

15. Kupplungsbohrungs-Bearbeitungsvorrichtung (1) nach Anspruch 14,
**dadurch gekennzeichnet, dass**
die Schnittstelle des Basisträgers (6) Führungsmittel (15) aufweist, über welche ein Bearbeitungsmodul der Bearbeitungseinheit an (4) dem Basisträger (6) in einer radial bezüglich der Kreisbogenführung des Portals (3) liegenden Y-Richtung verstellbar anbringbar ist.

16. Kupplungsbohrungs-Bearbeitungsvorrichtung (1) nach Anspruch 14 oder 15,
**dadurch gekennzeichnet, dass**
ein Bearbeitungsmodul als ein Honmodul mit einem an dem Basisträger (6) anbringbaren Grundkörper (16) und einem an dem Grundkörper (16) in einer Z-Richtung, die senkrecht zu der durch die Kreisbogenführung (5) definierten X-Y-Ebene liegt, verstellbar gehaltenen Schlitten (17), an dem ein Honkopf (19) mit einer in Z-Richtung liegenden Rotationsachse montiert ist, ausgebildet ist.

17. Kupplungsbohrungs-Bearbeitungsvorrichtung (1) nach Anspruch 16,
**dadurch gekennzeichnet, dass**
der Grundkörper (16) an dem Basisträger (6) in einer radial bezüglich der Kreisbogenführung (5) liegenden Y-Richtung verstellbar angebracht ist.

18. Kupplungsbohrungs-Bearbeitungsvorrichtung (1) nach Anspruch 16 oder 17,
**dadurch gekennzeichnet, dass**
der Honkopf (19) in der radial bezüglich des Kreisbogenführung (5) liegenden Y-Richtung beanstandet unterhalb von dem Schlitten (17) liegt und an einem mit dem Schlitten (17) verbundenen und sich insbesondere in Y-Richtung erstreckenden Querträger (18) drehbar gehalten ist.

19. Kupplungsbohrungs-Bearbeitungsvorrichtung (1) nach Anspruch 18,
**dadurch gekennzeichnet, dass**
ein Honantrieb (20) des Honmoduls an dem Schlitten (17) montiert und mit dem Honkopf (19) über ein Getriebe verbunden ist, welches zumindest im Wesentlichen in dem Querträger (18) untergebracht ist.

## Claims

1. Coupling-bore machining device (1) for machining bores (B), situated on a pitch circle, of coupling flanges (2a, 2b) of a coupling (2), with a portal (3) which has two stands (3a, 3b) which are in particular of arcuate design and are arranged parallel to one another and are connected to one another, and with a machining unit (4) which is guided movably in an X-Y plane on a circular arc guide (5) of the portal (3), **characterized in that** positioning means are provided on the stands (3a, 3b) of the portal (3), via which means the portal (3) can be placed onto the coupling flanges (2a, 2b) of a coupling (2) to be machined and can be positioned relative to these coupling flanges, and **in that** fastening means are present in order to fix the portal (3), which is placed onto the coupling (2), to the coupling (2).

2. Coupling-bore machining device (1) according to Claim 1, **characterized in that** a guide path (5a, 5b) of the circular arc guide (5) is formed on each stand (3a, 3b) of the portal (3).

3. Coupling-bore machining device (1) according to Claim 2 or 3, **characterized in that** the stands (3a, 3b) of the portal (3) are connected to one another by means of connecting struts (3c), wherein the length of the connecting struts (3c) is variable in order to set the spacing of the stands (3a, 3b) from one another.

4. Coupling-bore machining device (1) according to one of the preceding claims, **characterized in that** the fastening means have at least one clamping device in order to firmly clamp the portal (3), which is placed onto a coupling (2) to be machined and positioned there, to the coupling (2).

5. Coupling-bore machining device (1) according to Claim 4, **characterized in that** each stand (3a, 3b) is assigned a clamping device for fixing to a respective coupling flange (2a, 2b).

6. Coupling-bore machining device (1) according to Claim 4 or 5, **characterized in that** the at least one clamping device comprises clamping straps (10).

7. Coupling-bore machining device (1) according to Claims 5 and 6, **characterized in that** the clamping straps (10) can be fixed to the lower ends of the stands (3a, 3b) of the portal (3).

8. Coupling-bore machining device according to one of the preceding claims, **characterized in that** the fastening means have an anti-tilting safeguard which safeguards the portal (3), which is placed onto a coupling (2), against tilting.

9. Coupling-bore machining device (1) according to Claim 7, **characterized in that** the anti-tilting safeguard has a plurality of fastening struts (13) which can be fastened, in particular firmly screwed, to the portal (3) on the one hand and the coupling (2) on the other hand.

10. Coupling-bore machining device (1) according to one of the preceding claims, **characterized in that** the positioning means have supporting feet (7) which are held adjustably on the portal (3) in a Y direction situated radially with respect to the circular arc guide.

11. Coupling-bore machining device (1) according to Claim 10, **characterized in that** in each case three supporting feet (7) are arranged distributed along the circular arc guide (5) on the stands (3a, 3b) of the portal (3).

12. Coupling-bore machining device (1) according to Claim 10 or 11, **characterized in that** each supporting foot (7) has two respective contact surfaces (8) which are in each case oriented approximately tangentially to the circular arc guide (5).

13. Coupling-bore machining device (1) according to Claim 12, **characterized in that** the contact surfaces (8) are formed on contact plates (9) which are mounted on a base body of the associated supporting foot (7).

14. Coupling-bore machining device (1) according to one of the preceding claims, **characterized in that** the machining unit (4) has a base carrier (6) which is guided movably on the circular arc guide (5) of the portal (3) and has an interface for connecting to a machining module of the machining unit (4).

15. Coupling-bore machining device (1) according to Claim 14, **characterized in that** the interface of the base carrier (6) has guide means (15) via which a machining module of the machining unit (4) can be mounted adjustably on the base carrier (6) in a Y direction situated radially with respect to the circular arc guide of the portal (3).

16. Coupling-bore machining device (1) according to Claim 14 or 15, **characterized in that** a machining module is designed as a honing module with a basic body (16) which can be mounted on the base carrier (6) and with a carriage (17) held adjustably on the basic body (16) in a Z direction which is situated perpendicularly to the X-Y plane defined by the circular arc guide (5), on which carriage there is mounted a honing head (19) having an axis of rotation situated in the Z direction.

17. Coupling-bore machining device (1) according to Claim 16, **characterized in that** the basic body (16) is mounted adjustably on the base carrier (6) in a Y direction situated radially with respect to the circular arc guide (5).

18. Coupling-bore machining device (1) according to Claim 16 or 17, **characterized in that**, in the Y direction situated radially with respect to the circular arc guide (5), the honing head (19) is situated with a spacing below the carriage (17) and is held rotatably on a crossmember (18) which is connected to the carriage (17) and extends in particular in the Y direction.

19. Coupling-bore machining device (1) according to Claim 18, **characterized in that** a honing drive (20) of the honing module is mounted on the carriage (17) and connected to the honing head (19) via a gearing which is accommodated at least substantially in the crossmember (18).

## Revendications

1. Dispositif ( 1 ) d'usinage de trous d'accouplement pour l'usinage de trous ( B ) se trouvant sur un cercle partiel de brides ( 2a , 2b ) d'un accouplement ( 2 ) ayant un portique ( 3 ),
qui a deux montants ( 3a , 3b ) disposés parallèlement l'un à l'autre et reliés l'un à l'autre, en étant constitués notamment en forme d'arc,
et une unité ( 4 ) d'usinage qui est guidée en étant mobile dans un plan X-Y sur un guidage ( 5 ) en arc de cercle du portique ( 3 ),
**caractérisé en ce que**
il est prévu sur les montants ( 3a , 3b ) du portique ( 3 ) des moyens de mise en position par lesquels le portique ( 3 ) peut être mis sur les brides ( 2a , 2b ) d'un accouplement ( 2 ) à usiner et être mis en position par rapport à celles-ci,
et **en ce qu'**il est prévu des moyens de fixation pour immobiliser, sur l'accouplement ( 2 ), le portique ( 3 ) mis sur l'accouplement ( 2 ).

2. Dispositif ( 1 ) d'usinage de trous d'accouplement suivant la revendication 1,
**caractérisé en ce que**
une voie ( 5a , 5b ) du guidage ( 5 ) en arc de cercle est constituée sur chaque montant ( 3a , 3b ) du portique ( 3 ).

3. Dispositif ( 1 ) d'usinage de trous d'accouplement suivant la revendication 2 ou 3,
**caractérisé en ce que**
les montants ( 3a , 3b ) du portique ( 3 ) sont reliés entre eux par des entretoises ( 3c ) de liaison,
la longueur des entretoises ( 3c ) de liaison étant modifiable pour régler la distance des montants ( 3a , 3b ) entre eux.

4. Dispositif ( 1 ) d'usinage de trous d'accouplement suivant l'une des revendications précédentes,
**caractérisé en ce que**
les moyens de fixation ont au moins un dispositif de serrage pour bloquer sur l'accouplement ( 2 ) le portique ( 3 ) qui est mis sur un accouplement ( 2 ) à usiner et qui y est mis en position.

5. Dispositif ( 1 ) d'usinage de trous d'accouplement suivant la revendication 4,
**caractérisé en ce que**
un dispositif de serrage pour l'immobilisation sur respectivement une bride ( 2a , 2b ) de l'accouplement est associé à chaque montant ( 3a , 3b ).

6. Dispositif ( 1 ) d'usinage de trous d'accouplement suivant la revendication 4 ou 5,
**caractérisé en ce que**
le au moins un dispositif de serrage comprend des sangles ( 10 ) de serrage.

7. Dispositif ( 1 ) d'usinage de trous d'accouplement suivant les revendication 5 et 6,
**caractérisé en ce que**
les sangles ( 10 ) de serrage peuvent être immobilisées sur les extrémités inférieures des montants ( 3a , 3b ) du portique ( 3 ).

8. Dispositif ( 1 ) d'usinage de trous d'accouplement suivant l'une des revendications précédentes,
**caractérisé en ce que**
les moyens de fixation ont une sécurité au basculement qui empêche le portique ( 3 ) mis sur un accouplement ( 2 ) de basculer.

9. Dispositif ( 1 ) d'usinage de trous d'accouplement suivant la revendication 7,
**caractérisé en ce que**
la sécurité au basculement a plusieurs entretoises ( 13 ) de fixation qui peuvent être fixées, en étant notamment vissées, au portique ( 3 ) d'une part et à l'accouplement ( 2 ) d'autre part.

10. Dispositif ( 1 ) d'usinage de trous d'accouplement suivant l'une des revendications précédentes,
**caractérisé en ce que**
les moyens de mise en position ont des pieds ( 7 ) d'appui qui sont maintenus réglables sur le portique ( 3 ) dans une direction Y radiale par rapport au guidage en arc de cercle.

11. Dispositif ( 1 ) d'usinage de trous d'accouplement suivant la revendication 10,
**caractérisé en ce que**
sur les montants ( 3a , 3b ) du portique ( 3 ) sont répartis respectivement trois pieds ( 7 ) d'appui le long du guidage ( 5 ) en arc de cercle.

12. Dispositif ( 1 ) d'usinage de trous d'accouplement suivant la revendication 10 ou 11,
**caractérisé en ce que**
chaque pied ( 7 ) d'appui a respectivement deux surfaces ( 8 ) de contact qui sont dirigées respectivement à peu près tangentiellement au guidage ( 5 ) en arc de cercle.

13. Dispositif ( 1 ) d'usinage de trous d'accouplement suivant la revendication 12,
**caractérisé en ce que**
les surfaces ( 8 ) de contact sont constituées sur des plaques ( 9 ) de contact qui sont mises sur une pièce de base du pied ( 7 ) d'appui associé.

14. Dispositif ( 1 ) d'usinage de trous d'accouplement suivant l'une des revendications précédentes,
**caractérisé en ce que**
l'unité ( 4 ) d'usinage a un support ( 6 ) de base, qui est guidé de manière mobile sur le guidage ( 5 ) en arc de cercle du portique ( 3 ) et qui a une interface de liaison à un module d'usinage de l'unité ( 4 ) d'usinage.

15. Dispositif ( 1 ) d'usinage de trous d'accouplement suivant la revendication 14,
**caractérisé en ce que**
l'interface du support ( 6 ) de base a des moyens ( 15 ) de guidage par lesquels un module d'usinage de l'unité d'usinage peut être mis de manière réglable sur ( 4 ) le support ( 6 ) de base dans une direction Y radiale par rapport au guidage en arc de cercle du portique ( 3 ).

16. Dispositif ( 1 ) d'usinage de trous d'accouplement suivant la revendication 14 ou 15,
**caractérisé en ce**
**qu'**un module d'usinage est constitué sous la forme d'un module de rodage, ayant une pièce ( 16 ) de base pouvant être mise sur le support ( 6 ) de base et un chariot ( 17 ) maintenu réglable sur la pièce ( 16 ) de base dans une direction Z qui est perpendiculaire au plan X-Y défini par le guidage ( 5 ) en arc de cercle, chariot sur lequel est monté une tête ( 19 ) de rodage ayant un axe de rotation dans la direction Z.

17. Dispositif ( 1 ) d'usinage de trous d'accouplement suivant la revendication 16,
**caractérisé en ce que**
la pièce ( 16 ) est montée réglable sur le support ( 6 ) de base dans une direction Y radiale par rapport au guidage ( 5 ) en arc de cercle.

18. Dispositif ( 1 ) d'usinage de trous d'accouplement suivant la revendication 16 ou 17,
**caractérisé en ce que**
la tête ( 19 ) de rodage est, dans la direction Y radiale par rapport au guidage ( 5 ) en arc de cercle, à distance en dessous du chariot ( 17 ) et est maintenue tournante sur une traverse ( 18 ) reliée au chariot ( 17 ) et s'étendant notamment dans la direction Y.

19. Dispositif ( 1 ) d'usinage de trous d'accouplement suivant la revendication 18,
**caractérisé en ce**
**qu'**un entraînement ( 20 ) de rodage du module de rodage est monté sur le chariot ( 17 ) et est relié à la tête ( 19 ) de rodage par une transmission qui est logée, au moins pour l'essentiel, dans la traverse ( 18 ).
